# EUROPEAN PATENT SPECIFICATION

(11) **EP 3 239 226 B1**
(45) Date of publication and mention of the grant of the patent: **10.04.2019**
(21) Application number: 16167780.2
(22) Date of filing: 29.04.2016
(51) Int. Cl.: C08K 3/08, C09D 167/00, C08K 5/17, C08L 63/00

(54) **PARTICULATE COATING**
PARTIKULÄRE BESCHICHTUNG
REVÊTEMENT PARTICULAIRE

(43) Date of publication of application: 01.11.2017
(73) Proprietor: Jotun A/S, 3202 Sandefjord (NO)
(72) Inventor: OWE, Lars-Erik, 3202 Sandefjord (NO); GRORUD, Mette, 3202 Sandefjord (NO)
(74) Representative: Dehns

(56) References cited:
- WO-A1-2007/146388
- WO-A1-2016/038036

## Description

This invention relates to metallic effect particulate coatings formed using pigments such as aluminium. In particular, the invention relates to the avoidance of corrosion of these pigments in the formed coating as well as the avoidance of scuff marks or finger marks on such a coating. The invention also relates to the use of the particulate coating to coat a substrate as well as to a process for the manufacture of the particulate coating, a process for curing the coating and uses of the coating. The particulate coating of the invention preferably forms a top coat on the substrate.

Traditionally, coating powders have been made by the extrusion of a mixture of resins and curing agents (and standard additives etc) to obtain a homogeneous mixture and then grinding the extrudate and screening the product to obtain the desired particle sizes and particle size distribution. The powder is then electrostatically sprayed onto a substrate, traditionally a metal substrate, and cured at high temperatures. The nature of the finish on the substrate was adjusted by the addition of additives.

A growing market for powder coatings is in the field of metallic powder coatings which provide a metallic effect on the surface of an article being coated. The metallic effect is achieved by adding metallic pigments into the powder coating at an appropriate time. These metallic effect pigments may corrode, however, if they are exposed to oxygen, humidity etc. Corrosion may also be caused by contact with acids, bases and water. This ruins the appearance and integrity of the coating. To avoid this problem, current practice involves the use of an extra clear coating layer applied separately over the metallic effect coating in order to provide protection against corrosion. The application of this further coat is time consuming and expensive however, and the customer wants a simpler solution to avoid the use of the extra clear coat. One coat less saves much time and money.

It is also observed that these metallic pigment containing powder coating compositions may suffer from inhomogeneity if the metallic pigment is not dispersed properly in the coating. A further issue of concern is scuff marks or finger marks on the formed coating. In order to keep an ideal aesthetic appearance, the avoidance of these marks is desired. It would be desirable to prepare a particulate coating composition that was able to address some or all of these issues.

The present inventors solve this problem through the addition of an amino alcohol to the powder coating. The present invention preferably relates to a polyester/epoxy powder coating composition which contains metallic effect pigments like aluminium powder/flakes and an amino alcohol. Surprisingly, this powder coating composition can be applied as a single coat without the need to apply an extra top coat.

This formulation surprisingly stabilises the metallic pigment against corrosion, e.g. improves acid resistance, base resistance and resistance to water/ humidity. The need therefore, for a clear top coating layer is negated. The amino alcohol also aids the dispersability of the metallic pigment in the powder coating composition. The coating of the invention remarkably is less prone to discolouration by fingerprints when it is handled or touched.

The problem of corrosion of metallic pigments has been recognised before and attempts have been made to solve this problem in other ways, with limited success. In US2009/0264575, the inventors suggest coating the metallic pigment particles. The coating is ideally based on epoxy and polyester resins and is therefore compatible with the binder which generally forms the major part of the film forming coating. The idea is that embedding the metallic pigments within the epoxy/polyester resin prevents corrosion of the pigment. In essence therefore, this reference provides a metallic particle that is coated to isolate the metal from air and moisture. That coated metallic particle can be used as a masterbatch in a powder coating to provide the pigment in desired amounts. Some manufacturers even use a double coating technique, e.g. based on an inorganic/organic double coating such as a silica coating followed by an acrylate coating or polyester/epoxide coating.

Coating of the metal particles improves the stability of the pigments during storage, but the resistance of these particles to corrosion once applied to a substrate is still not ideal Thus whilst many metallic particles are coated to enable storage over a prolonged period before application, our experience is that on application, these particles are still susceptible to oxidation. Moreover, coating the particles is expensive and time consuming.

CN101225279A considers a composition that is designed to address the issue of fingerprint marks. It however employs epoxy resin, polyester resin, pigment and filler, and aluminum flakes. The aluminum flakes allegedly improves the flow performance, enhances the resistance to abrasion and scratch and has a defoam function.

CN103483979A discloses a powder coating composition which contains aluminium flakes, epoxy resin, polyester resin and vinyl tris(beta-methoxy ethoxy)silane as adhesion promoter. This combination allegedly improves wear resistance, anti-scratch property and defoaming function.

No one however, has previously suggested the possibility of using an amino alcohol in these powder coatings compositions. Not only therefore does the amino alcohol lead to better aesthetic appearance, but the dispersibility of the metallic pigment is improved. Moreover, the use of the amino alcohol leads to an improvement in corrosion resistance. This might manifest in an improvement in the acid or base resistance of the coating. Finally, humidity resistance can be improved.

### Summary of the invention

Viewed from one aspect the invention provides a particulate coating composition, preferably a powder coating composition, comprising:
(i) at least one hardener such as at least one epoxy containing compound,
(ii) at least one polyester polymer,
(iii) at least one amino alcohol; and
(iv) at least one metallic pigment.

Viewed from another aspect the invention provides a substrate coated with a particulate coating composition, preferably a powder coating composition, comprising:
(i) at least one hardener such as at least one epoxy containing compound;
(ii) at least one polyester polymer;
(iii) at least one amino alcohol; and
(iv) at least one metallic pigment.

Viewed from another aspect the invention provides a substrate coated with a primer layer and thereover a particulate coating composition layer, preferably a powder coating composition layer, comprising:
a particulate coating composition, preferably a powder coating composition, comprising:
   (i) at least one hardener such as at least one epoxy containing compound;
   (ii) at least one polyester polymer;
   (iii) at least one amino alcohol; and
   (iv) at least one metallic pigment.

Viewed from another aspect the invention provides a substrate coated with a particulate coating composition or a substrate coated with a primer layer and thereover a particulate coating composition as herein defined wherein said powder coating composition is cured.

Preferably, said particulate coating composition forms the top layer on the substrate.

Viewed from another aspect the invention provides a kit comprising:
a first composition comprising at least one hardener such as at least one epoxy containing compound, at least one polyester polymer, and at least one amino alcohol; and
a second composition comprising at least one metallic pigment.

Viewed from another aspect the invention provides a process for producing a particulate coating composition, preferably powder coating composition, comprising blending at least one hardener such as at least one epoxy containing compound, at least one polyester polymer, and at least one amino alcohol to form a mixture;
extruding said mixture to obtain particles;
adding at least one metallic pigment to form a particulate powder coating.

Viewed from another aspect the invention provides the product of the process as hereinbefore described.

Viewed from another aspect the invention provides a process for coating a substrate with a particulate coating as hereinbefore defined, e.g. using electrostatic spraying, comprising applying said particulate coating to said substrate, e.g. using electrostatic spraying and optionally curing the coating.

Viewed from another aspect the invention provides a process for coating a substrate with a particulate coating composition, preferably powder coating composition, comprising blending at least one hardener such as at least one epoxy containing compound, at least one polyester polymer, and at least one amino alcohol to form a mixture;
extruding said mixture to obtain particles;
adding at least one metallic pigment to form a particulate powder coating;
applying said particulate coating to said substrate, e.g. using electrostatic spraying and optionally curing the coating.

Viewed from another aspect the invention provides use of an amino alcohol to prevent corrosion of a metallic pigment present in a powder coating composition comprising at least one hardener such as at least one epoxy containing compound, at least one polyester polymer, and at least one metallic pigment.

It is preferred if the coating described herein is a top coat. Thus, no further coating should be applied on the top of the coating of the invention.

### Detailed description of the invention

This invention relates to a particulate coating composition such as a powder coating composition which can be used to coat a substrate. The particulate coating composition must contain at least four components: at least one hardener such as an epoxy containing compound, at least one polyester polymer, at least one amino alcohol and at least one metallic pigment. The particulate coating composition of the invention is preferably used as a top coat on a substrate, which may or may not be provided with a primer layer. The term top coat implies that no additional coating layer is applied on top of the particulate coating layer of the invention.

The amino alcohol is believed, *inter alia,* to prevent corrosion of the metallic pigment within the coating thus avoiding the need for the application of a clear top coat over the coating layer. Thus, the amino alcohol may help prevent acid, base and water damage to the coating. The amino alcohol also helps disperse the metallic pigment in the particulate coating. The amino alcohol helps to prevent aesthetic discoloration of the coating, e.g. via fingerprints or other human skin contact or via scuffing.

The particulate composition of the invention is preferably obtainable by the blending of two particulate, preferably powder compositions. A particulate composition containing an amino alcohol can be blended with a particulate composition containing a metallic pigment.

### Polyester polymer

The coating composition of the invention contains at least one reactive polyester polymer. The term reactive implies that the polyester polymer must contain functional groups that are capable of reacting with the functional groups of the hardener to cure the coating. Suitable functional groups present on the polyester include carboxyl groups, ester groups, isocyanate groups and hydroxyl functional groups. Ideally, the polyester is solid. The polyester is further preferably a carboxylated or hydroxylated polyester, especially a saturated, carboxylated polyester resin or a saturated, hydroxylated polyester resin. Most preferably, the polyester is a carboxylated polyester resin and therefore comprises a plurality of pendant COOH groups.

Thus the polyester polymer is preferably a solid resin containing a plurality of free carboxyl groups or hydroxyl groups. Preferably, the polyester polymer has a Tg above 40°C, more preferably above 50°C.

Ideally, the polyester resin is characterised in terms of its acid value (AV). Most preferred are polyester resins with acid value (AV) between 20-80 mg KOH/g, such as 30 to 70 mg, KOH/g, preferably 40-60 mg KOH/g. Resins in the range of 55 to 68 mg KOH/g or 60 to 70 mg KOH/g are especially preferred.

More preferably, the polyester polymer is an acid functional polyester, especially one having the AV above.

The polyester polymer therefore preferably contains a plurality of carboxyl groups. These groups must be capable of reacting with the hardener, ideally epoxy groups and must therefore be available for reaction. That means carboxyl groups should be pendant on the molecule. Moreover, this component of the powder coating of the invention is a polymer, e.g. is formed from the polymerisation of monomers at least one of which is one containing a carboxyl group

It is possible to use a mixture of polyesters polymers or use one polyester polymer.

The use of carboxyl functional polyesters is preferred especially those designated 50/50 type resins to 80/20 type resins (i.e. where there is 80 wt% carboxy functional polyester is used to 20 wt% epoxy compound of the binders). The value of AV and EEW, should preferably complement each other. For example, the AV of a 50/50 type resin may be 60 to 80 mg KOH/g. Resins that are defined as 80/20 resins will have lower AV, such as 20 to 40 mg KOH/g.

The monomers used to form the polyesters of the invention may be based on terephthalic acid, isophthalic acid monomers together with, for example glycols such as neopentyl glycol.

Alternatively the polyester may be OH functional. Hydroxyl values are preferably about 50 - 300 mg KOH/g.

Another alternative may also be unsaturated polyesters. These can be hardened using peroxide initiators. The term unsaturated polyester implies the presence of multiple unsaturated bonds in the side chains of the polyester, e.g. introduced through (meth)acrylate. Unsaturated polyesters of use in this embodiment are amorphous or crystalline. Crystalline unsaturated polyesters are described in WO2011/138431 A1 and WO2011/138432 A1. These materials can be hardened using peroxides, optionally in conjunction with infrared radiation or radiation or using photo initiators for radiation cure with UV. The hardener in this regard is the initiator.

The polyester polymer is preferably one with a Mw of at least 1000, more preferably at least 2000. The upper Mw value may be 10,000. Preferred Mw values are 2000 - 6000, preferably 2500 to 5000, such as about 3000. The molecular weights are determined by gel permeation chromatography (GPC) using a polystyrene standard.

Such resins are well known in the art and are sold under the trade names such as Uralac from DSM and Crylcoat from Allnex.

### Hardener

It is also essential to use at least one hardener. The hardener reacts with the polyester polymer during the curing reaction to provide a film coating on the substrate.

It is preferred if the hardener is an epoxy containing compound such as an epoxy resin. It is also possible to use a mixture of epoxy containing compounds.

The epoxy containing compound is preferably an epoxy resin. Ideally it is a solid resin containing one or more epoxy groups. Suitable resins are again well known in the art and well known commercial products. Epoxy containing compound include TGIC (triglycidyl isocyanurate), Araldite PT 910/ PT912, bisphenol A based resins, novolac resins, novolac modified resins, 4,4'-isopropylidenediphenol-epichlorohydrin resins (bisphenol F) based resins, glycidyl methacrylates (GMA) and so on.

In one preferred embodiment, the epoxy resin is TGIC, Araldite PT 910/ PT912, bisphenol A based resins, novolac modified resins, or 4,4'-isopropylidenediphenol-epichlorohydrin resins (bisphenol F) based resins. Thus, in one embodiment the using of glycidyl methacrylate (GMA) or glycidyl methacrylates (GMA) in general is excluded. Especially preferred is bisphenol A resin.

Most preferred are solid epoxy resins with an equivalent epoxy weight (EEW) of 300-2000. These resins are often described by their "type". Type 2, 2.5, 3, 4 and novalac modified type resins are all suitable here. Type 2 resins may have an EEW = 550-700, e.g. Epikote resin 1002, Epikote resin 3022-FCA. Type 2.5 resins may have a EEW = 600-750, e.g. Araldite GT 6450. Type 3 resins may have EEW = 700-850, e.g. Epikote resin 3003, Araldite GT 7004. Type 4 type resins may have EEW = 800-1000, e.g. Epikote resin 1055. Novalac modified type resins may include Epikote resin 2017 or Araldite GT 7255.

The use of an epoxy resin of EEW 730 to 840 (such as type 3) is especially preferred.

As an alternative to epoxy resins, the invention also envisages the use of other hardeners such as hydroxyalkyl amide hardeners and polyisocyanate hardeners such as one of the uretdione type, or caprolactam blocked isocyanates (e.g. isophorone diisocyanate). In particular, the polyisocyanate hardeners are preferably used with hydroxyl functionalised polyester resins to give polyurethanes. Hydroxy alkyl amide hardeners can be used with carboxylic functionalized polyester resins. The use of hydroxy alkyl amide hardeners is especially preferred such as Primid XL-552, available from Ems Primid.

A further alternative hardener is simply a peroxide where the polymer is an unsaturated polyester and can undergo a curing reaction with itself upon initiation with a peroxide.

It will be appreciated that the hardener and polyester need to react in order to cure the coating. Accordingly, it is preferred if these components are mixed in such a ratio that reactive groups, e.g. carboxyl, in the polyester and e.g. epoxy groups within the hardener are within ±25% of stoichiometric ratio. A carboxyl and epoxy ratio within ±10% of stoichiometric ratio is more preferred. A carboxyl and epoxy ratio within ±5% of stoichiometric ratio is most preferred.

The skilled man will be aware that some of the additives discussed below may contain carboxyl groups. When calculating the EEW to AV ratio, account should be taken of the contribution made by any carboxyl groups in the standard additives used in the powder coating.

It will be appreciated therefore that this calculation is based on the total number of carboxyl and epoxy groups present. If compounds contain multiple carboxyl or epoxy groups that must be considered in these calculations that will nevertheless be routine for the skilled chemist.

The combination of the hardener and polyester polymer is called the binder system herein. Ideally, the invention employs a hybrid epoxy-carboxyl functional polyester binder system. These systems are well known in the art. It is within the scope of the invention to employ a pure polyester binder where that binder is a unsaturated polyester which can be hardened via an epoxide.

Thus, the polyester may form 50 to 97 w% of the binder, preferably 60-96wt% of binder. The hardener may form 3 to 50, preferred 3 to 40 wt% of the binder. The amount of polyester polymer will therefore be around the same as or exceed that of the hardener compound. Where an unsaturated polyester binder is employed the polymer can form almost 100wt% of the binder, with a small contribution from the initiator hardener.

The amount of binder in the powder coating of the invention may be 40 to 99 wt%, preferably 50 to 95 wt%.

### Metallic Pigment

The particulate coating of the invention comprises a metallic pigment. The purpose of the metallic pigment is to provide a coated substrate with a metallic colour effect. These are used therefore to coat household appliances, furniture, building components, tools, vehicles and so on to provide a metallic effect coating.

Any metallic pigment can be used in this invention although the pigment should be one that is subject to corrosion. The present invention is related, *inter alia,* to a method of reducing the corrosion or preventing corrosion of the metal pigment. It will be clear therefore that the pigment in question should preferably be one that may corrode.

The metal in question is typically a transition metal (groups 3 to 12 of the periodic table), Al or Sn. The pigment can also be present as an alloy. The pigment ideally contains the metal in elemental or alloy form rather than as a salt (e.g. oxide) or in ionic form. It will be appreciated therefore that many powder coatings contain titanium dioxide and other metal salts as fillers. Titanium dioxide is a white powder and is not subject to corrosion and is not a metallic pigment. The metallic pigment must be capable of providing a metallic effect in the formed coating.

The metallic pigment is usually in flake form or particle form and may comprise aluminium or an aluminium alloy or another metal or alloy, for example, stainless steel, copper, tin, bronze or brass (gold is generally too expensive) and may be used to produce various metallic effects including those referred to as "lustre" or "glamour" finishes. Combinations of two or more different metallic pigments may be used.

The metallic pigment is advantageously aluminium or an alloy thereof. A "leafing" or a "non-leafing" system may be used. In a leafing system, the aluminium flakes orient themselves in a continuous layer at or near the surface of the applied coating film, producing an opaque silver finish.

Non-leafing aluminium pigments, which orient themselves throughout the coating film, provide aesthetics quite unlike leafing aluminium pigments. They are unique in their ability to project "flop", polychromatic and sparkle effects. "Flop" is the ability to change colour when viewed at different angles. This capability is directly related to flake orientation in the film.

The metallic pigment(s) are usually incorporated in the powder coating composition after the extrusion or other homogenisation process (hereinafter "post-blended"). One form of post-blending method comprises dry-blending and any available dry-blending incorporation method may be used. Pigments can be added before or after milling, e.g. at the particle sieving stage. In theory however, metal pigments can be added at various stages of the manufacturing process, e.g. a portion before milling and a portion before sieving. The person skilled in the art can devise ways of adding the pigment to the powder coating. In one possible embodiment, pigments are added at the premix stage, i.e. before extrusion. Products advertised under the trade name "Powdersafe" or "Powdersafe-02" are suitable for direct extrusion. The use of these pigments forms a further aspect of the invention.

Viewed from another aspect the invention provides a process for producing a particulate coating composition, preferably powder coating composition, comprising blending at least one hardener such as at least one epoxy containing compound, at least one polyester polymer, at least one metallic pigment and at least one amino alcohol to form a mixture;
extruding said mixture and optionally milling and/or grinding to obtain a particulate powder coating.

In particular the pigment and the powder coating can be "bonded". A bonding method is to be understood as being a mixing process of a powder coating and a metallic pigment in which the metallic pigment particles are physically bonded to the powder coating particles by heating the mixture to the glass transition temperature of the powder coating. Adhesion of the metallic pigments to the surface of the powder coating particles is therefore achieved.

A range of hammer and other textured metallic finishes can be produced using, in addition to the metallic pigment, an appropriate hammer or other structure additive.

The metallic pigment may be an uncoated or coated material. Examples of coated materials include pigments coated with silica or another inert inorganic material for greater chemical resistance and durability. Alternatively, the pigment may be coated with a polymeric material for similar purposes, for example, an acrylic, PTFE or thermosetting plastics material, or may be carried in a polymer or plasticiser which is compatible with the film-forming binder of the powder coating composition, such as a polyester/epoxide coating. As a further possibility, the metallic pigment may be coated with a colouring agent such as a metal oxide pigment such as, for example, iron oxide, to provide special colour effects. The use of metallic pigments coated with silica is preferred to improve the stability of the particles both during storage and during further coating. Double coated particles (e.g. using an inorganic then organic coating) are possible but less favoured as their metallic effect is reduced. It may also be possible to use a silane as an adhesive in the metallic pigment to bind a coating layer to the particle.

Ideally particles are not coated with an organic coating. Ideally particles are not coated with an oligomeric or polymeric coating.

The total proportion of metallic pigment(s) incorporated in the coating composition may be in the range of from 0.1 to 10% by weight (based on the weight of the coating composition, for example, from 0.4 to 8% by weight, preferably from 0.5 to 5% by weight, typically from 1 to 4% by weight. These values refer to the actual weight of particles which may or may not be coated.

The particle size, d50 of the metallic pigment may be in the range of 3-50 µm. Typically, the particle size is d50 10-30 µm. Ideal average particle sizes are no less than d50 10µm. Particle sizes can be measured using a Malvern machine which gives size in d50. D₅₀ is the mass-median-diameter (MMD). The MMD is considered to be the average particle diameter by mass.

### Amino Alcohol

The amino alcohol of the invention is a compound comprising at least one hydroxyl group and at least one primary, secondary or tertiary amine group. Salts thereof could also be used. Preferably, the amino alcohol of the invention will be formed from elements C, H, O and N only. The use of primary or secondary amino alcohols is preferred.

In general, the amino alcohols that may be used in accordance with the invention include those having the following formulas:

NH₂R¹

where R¹ is a linear or branched alkyl group of 1 to 10 carbons, preferably 2 to 8 carbons, and more preferably 2 to 4 carbons, that contains at least one hydroxyl group; and

NHR¹R²

where R¹ is a linear or branched alkyl group of 1 to 10 carbons, preferably 2 to 8 carbons, and more preferably 2 to 4 carbons, or a linear or branched alkyl group of 1 to 10 carbons, preferably 2 to 8 carbons, and more preferably 2 to 4 carbons that contains at least one primary hydroxyl group and R² is a linear or branched alkyl group of 1 to 10 carbons, preferably 2 to 8 carbons, and more preferably 2 to 4 carbons that contains at least one hydroxyl group.

Mixtures of these amino alcohols can also be employed. It is preferred if the hydroxyl group in these formula is primary, i.e. forming a -CH₂-OH group with the carbon to which it is attached.

The amino alcohols used in accordance with the present invention can be in liquid or solid form. A person of ordinary skill in the art is familiar with the techniques that can be utilized to incorporate liquid amino alcohols into the powder mixture. For example, prior to adding the liquid amino alcohols to the powder coating mixture of the present invention, the liquid amino alcohols can be absorbed onto an inert carrier, such as silica.

Preferably, the amino alcohols of the present invention include, but are not limited to diethanolamines, ethanolamines, 2-amino-1-butanol, 2-amino-2-methyl-1-propanols, 2-amino-2-ethyl-1,3-propanediols, tris(hydroxymethyl)aminomethanes, 2-amino-2-methyl-1,3-propanediols, monomethylaminoethanols, isopropylaminoethanols, t-butylaminoethanols, ethylaminoethanols, n-butylaminoethanols, isopropanolamines, diisopropanolamines, and mixtures thereof. More preferably, the alkanolamines of the present invention are diethanolamines, tris(hydroxymethyl)aminomethanes, and mixtures thereof.

Preferably the amino alcohol of use in the invention will have a molecular weight of less than 500 g/mol such as 50 to 400 g/mol, e.g. 75 to 350 g/mol.

The amino alcohol may have 1 to 3 amino groups, preferably 1 to 2 amino groups, preferably 1 amino group. It is preferred if the amine functionality comprises an N-H bond, i.e. the amine is primary or secondary, especially primary (-NH₂).

The amino alcohol may comprise one hydroxyl group or 2 to 5 hydroxyl groups, such as 2 or 3 hydroxyl groups.

Ideally, the amino alcohol has one amine group, ideally a primary amine, and 2 or more, such as 3, hydroxyl groups.

Preferred amino alcohols are tris(hydroxymethyl)aminomethane (THAM) and diethanolamine. Possible amino alcohols therefore include:
Ethanolamine;
2-(Methylamino)ethanol;
3-Amino-1-propanol
Amino-2-propanol
DL-Alaninol
3-Amino-1,2-propanediol
Serinol (C3H9NO2)
1,3-Diamino-2-propanol
1-Amino-2-methyl-2-propanol
1-Methoxy-2-propylamine
2-(Ethylamino)ethanol
2-Amino-1-butanol
2-Amino-2-methyl-1-propanol
2-Amino-2-methyl-1-propanol
2-Dimethylaminoethanol
3 -Methoxypropylamine
3 -Methylamino-1 -propanol
4-Amino-1-butanol
2-(2-Aminoethoxy)ethanol
3-Methylamino-1,2-propanediol
Diethanolamine
Tris(hydroxymethyl)aminomethane
N-(2-Hydroxyethyl)ethylenediamine
meso-1,4-Diamino-2,3-butanediol
trans-2-Aminocyclopentanol hydrochloride
1-Dimethylamino-2-propanol
2-(Isopropylamino)ethanol
2-(Propylamino)ethanol
2-Amino-3-methyl-1-butanol
3-Dimethylamino-1-propanol
3 -Ethoxypropylamine
5 -Amino-1 -pentanol
2-Amino-1-pentanol
3-(Dimethylamino)-1,2-propanediol
N-Methyldiethanolamine
2-(3-Aminopropylamino)ethanol
1-Amino-1-cyclopentanemethanol
trans-2-Aminocyclohexanol
trans-4-Aminocyclohexanol
2-(Butylamino)ethanol
2-(Diethylamino)ethanol
2-(tert-Butylamino)ethanol
2-Dimethylamino-2-methylpropanol
4-(Dimethylamino)-1-butanol
6-Amino-1-hexanol
2-Amino-1-hexanol
Bis(2-hydroxypropyl)amine
N-Ethyldiethanolamine
Triethanolamine
N,N'-Bis(2-hydroxyethyl)ethylenediamine
3-Diethylamino-1-propanol
3-(Diethylamino)-1,2-propanediol
1,3-Bis(dimethylamino)-2-propanol
2-{[2-(Dimethylamino)ethyl]methylamino}ethanol
2-(Diisopropylamino)ethanol
N-Butyldiethanolamine
N-tert-Butyldiethanolamine; and
2-(Dibutylamino)ethanol.

The amount of amino alcohol in the composition of the invention may be 0.1 to 10 wt%, such as 0.2 to 5 wt%, preferably 0.2 to 4 wt%, e.g. 0,2 to 3wt%.

Viewed from another aspect the invention therefore provides a particulate coating composition, preferably a powder coating composition, comprising:
(i) at least one hardener,
(ii) at least one polyester polymer, wherein components (i) and (ii) together form 40 to 99 wt% of the coating composition;
(iii) 0.1 to 10 wt% of at least one amino alcohol; and
(iv) 0.1 to 10 wt% of at least one metallic pigment.

The invention also provides a substrate coated with this particulate coating.

It is preferred if the amino alcohol forms 0.3 to 5 wt% of the coating composition such as 0.3 to 3 wt%.

### Manufacture

It is preferred if the polyester polymer, hardener and the amino alcohol are premixed and extruded. Extrusion conditions are known and will generally be kept at low temperature to avoid premature curing.

The ingredients can be mixed and extruded to form particles as is known in the art, and the particles can then be milled to form powder. Metal pigments can be added after extrusion or, using the Powdersafe technology discussed above, they could also be added before extrusion. Metallic pigments and particulate coatings can be bonded together in a process in which the pigment and the particulate coating are mixed and heated to the glass transition temperature of the particulate coating. Adhesion of the metallic pigments to the surface of the particulate coating particles is therefore achieved.

Pigments can be added before or after milling, preferably after. After milling, sieving can be used to maximise particle distribution homogeneity.

In order to ensure homogeneity before extrusion, the components of the blend must be well mixed. It is preferred to keep the extrudate temperature below 140°C to prevent premature curing.

The extruded granulates can be milled by all types of conventional mills and the particles thereafter classified by a method of choice, to a particle size found most suitable for powder application. The particle size distribution d50 of the powder coating composition may be in the range of 10 to 120 µm with a preferred particle size d50 in the range of from 15 to 75 µm, preferably at least 20 or 25 µm, advantageously not exceeding 50 µm, more especially 20 to 45 µm. In general, particle sizes can be established using a Malvern particle size analyser.

### Additives

It will also be appreciated that the particulate coatings of the invention may contain a wide variety of standard industry additives. Additives of use include gloss modifiers, scratch resistors, pigments (non corrodible metallic and non-metallic pigments), fillers, degassing additives, flow control agents, waxes, antioxidants, optical brighteners and surface modifying agents. These additives in total can generally form up to about 60 wt% of the powder coating, e.g. up to 40 wt%, ideally up to 20 wt%, such as up to 10 wt% of the coating. Additives might be present in as little as 2 wt% or less of the particulate coating, in particular when a primer layer is also present.

Fillers include micronized minerals. Pigments of interest include organic pigments and inorganic pigments such as carbon black.

In particular pigments and fillers may form up to 50 wt% of the coating such as up to 40 wt% on total weight, preferably 2,0-20 wt%. These numbers include therefore the metallic pigment discussed in detail above.

Other additives might form 0.1 to 15 wt% on total weight of the powder coating, such as 0.5 to 15 wt%, preferably 0.7 to 10 wt%, especially 1 to 8 wt%. It will be appreciated that the powder coating of the invention must be dry and free of water and other volatile organic solvents.

### Application to substrates

The particulate coating of the invention can be applied to a substrate by any conventional powder coating method such as spraying, e.g. electrostatically. The use of triboelectric guns can also be used. Coating techniques are well known in the art and will be familiar to the skilled man. The coating composition may be used as a one layer coating or be used on top of a primer forming a top coat. In any embodiment, it is preferred if the coating of the invention forms the top layer employed on any substrate. Thus, the inventive coating can serve as a dual primer and top coat layer or may be applied on a conventional primer layer.

### Substrate

The substrate onto which the particulate coatings of the invention should be applied can be any substrate such as a metal substrate (steel, galvanized steel, aluminium), wood, MDF, HDF, plywood, fibreboard, particleboard, plastic, glass, ceramic, graphite-filled composites and so on. Substrates for interior or exterior use are envisaged.

Coated articles include appliances, building components, furniture, vehicles, fixtures and fittings and so on.

The object being coated may be provided with a primer layer although this is not essential. The primer may use zinc or zinc free powder or liquid corrosion inhibiting primer. Typical epoxy and epoxy/polyester primers comprise 0-85 wt% zinc. The powder coating of the invention forms the top coat on any substrate. Thus, no additional coating layer is applied thereon. Substrates may therefore comprise a primer layer and top coat comprising the powder composition of the invention or simply comprise the top coat of the invention without a base primer layer.

### Curing

Once a substrate is coated with the powder coating, the coating must be cured. The coated substrate may be cured in a conventional convection oven or an IR/convection combination oven. It is also possible to use induction heating. The use of a convection/induction oven or even convection/induction/IR oven is also contemplated. The use of heat curing is preferred.

Where heating is used during cure, the temperature should preferably be in the range of 100 to 250°C, e.g. 140 to 200°C.

The powder coating of the invention can be cured using short curing cycles, e.g. of 15 minutes or less.

The powder coating is preferably free flowing during the curing operation and therefore this leads to smooth, even finishes.

The film thickness of the cured coating is preferably 20 to 200 microns such as 30 to 120 microns especially 40 to 100 microns.

It is a feature of the invention that the powder coating of the invention does not corrode. The lack of corrosion also manifests itself in good colour retention and low gloss change. The coating is preferably therefore resistant to acid, base and water.

It will be appreciated that the coating should also provide an acceptable metallic effect. The whole point of the coatings of the invention is to provide a coated substrate with a metallic paint effect. The coatings of this invention are able to provide a good metallic effect whilst also reducing corrosion. Ideally, the coatings offer a "wet paint" effect. The wet paint look is achieved when the gloss difference between gloss measured at 20° and 60° is minimised. It preferred if the delta gloss value measured at these angles is 50 or less.

The invention will now be described with reference to the following non limiting examples.

### Analytical methods

*Film thickness:* Measured according to ISO 2178.
*Gloss:* Measured according to ISO 2813 at 60° or 20° measurement angle.
EEW: Measured according to ASTM D-1652
Acid Value (AV): Measured according to ASTM D974
Color changes, ΔL and ΔE were measured using a Largo Coloreye 3000 instrument.

### Examples - general protocols

### Preparation of powder:

The ingredients (except metallic pigment) were dry-mixed in a high speed mixer in order to ensure sufficient dispersion of the powder pre-mix. The pre-mix was then added to a Theyson TSK 20-24 twin-screw extruder and extruded under the following conditions: 30 degrees in the feed zone, 50 degrees in the melting zone, 100 degrees in the mixing & dispersion zone, 100 degrees at the head, 500 rpm. 60-65 torque

The extruded material was fed to a chilled roll and passed through a crusher, reducing the chilled material to flakes. The crushed flakes were then fed to a mill. The extruded chips were milled in a mill and sieved through a 125 µm rotational sieve in order to ensure a particle size distribution (PSD) (d₅₀) of 25-50 µm (determined using a Malvern particle size analyzer).

The metallic pigment was then gently mixed with the powder.

### Application of powder to substrate

The powder was applied to panels of iron phosphated cold roll steel using a standard corona charging spray-gun.

### Curing of films

Substrates coated with powder were cured in conventional heat transfer by convection using a Heraeus conventional benchtop oven.

Curing temperature was 180°C object temperature, with 10 minutes curing time at object temperature.

### Examples:

The examples of the invention are based on a powder coating composition as described in Table 1. 1,5 wt% Standard Aluminium Powder Special PCR 901 was added post extruder. All other components are preblended and extruded.

Typical film thickness: 50-100 µm.
Table 1 summarises components in each example:

**Table 1 (numbers in wt%)**

| **Component** | **1 (ref.)** | **2** | **3** | **4** | **5** | **6** | **7** |
|---|---|---|---|---|---|---|---|
| Carboxyl functional Polyester resin (AV 60-70) | 37,4 | 37,3 | 37,0 | 36,7 | 37,3 | 37,0 | 36,6 |
| Carboxyl functional Polyester resin (AV 55-68) | 8,6 | 8,6 | 8,5 | 8,5 | 8,6 | 8,5 | 8,5 |
| Epoxy type 3 | 40,3 | 40,2 | 39,9 | 39,5 | 40,2 | 39,9 | 39,5 |
| Degassing additive | 0,3 | 0,3 | 0,3 | 0,3 | 0,3 | 0,3 | 0,3 |
| Flow additive | 1,1 | 1,1 | 1,1 | 1,1 | 1,1 | 1,1 | 1,1 |
| TiO₂ | 1,5 | 1,5 | 1,5 | 1,4 | 1,5 | 1,5 | 1,4 |
| Sodium feldspar Filler | 4,3 | 4,3 | 4,3 | 4,2 | 4,3 | 4,3 | 4,2 |
| BaSO₄ Filler | 6,5 | 6,5 | 6,4 | 6,4 | 6,5 | 6,4 | 6,34 |
| Tris(hydroxymethyl) aminomethane (THAM) | 0 | 0,3 | 1,0 | 1,95 | - | - | - |
| Diethanolamine | - | - | - | - | 0,3 | 1,0 | 2,03 |

### Test results

### Fingerprint resistance

Human fingers were pressed against the coated surface to leave fingerprint on the surface. The coatings that contain the amino alcohol are less prone to becoming discoloured by fingerprints when they are handled or touched and are easier to remove with a paper tissue. The scale below was used to evaluate the fingerprint resistance performance.
F1 = Severe fingerprinting which is difficult to remove
F2 = Pronounced fingerprinting which is difficult to remove
F3 = Evident fingerprinting which is quite easy to remove
F4 = Slight visible fingerprinting which is easy to remove.
F5 = No visual fingerprinting

The coatings were also assessed according to appearance. Lower gap between gloss measured at 20° angle and gloss measured at 60° angle was defined as "wet-paint look". We perceive a difference of 50 to reflect a "wet paint" look.

**Table 2**

| | **1 (ref.)** | **2** | **3** | **4** | **5** | **6** | **7** |
|---|---|---|---|---|---|---|---|
| Fingerprinting properties | F1 | F3 | F4 | F4+ | F3 | F4 | F3 |
| Gloss at 60° | 97 | 91 | 85 | 85 | 85 | 81 | 78 |
| Gloss at 20° | 43 | 46 | 41 | 42 | 41 | 35 | 29 |
| Delta gloss (gloss at 60° - gloss at 20°) | 54 | 45 | 44 | 43 | 44 | 46 | 49 |
| Appearance | A | B | B | B | B | B | B |

| | | | | | | | |
|---|---|---|---|---|---|---|---|
| Appearance A: Haze, agglomeration of metallic pigment Appearance B: Wet paint look, no agglomeration of metallic pigment | | | | | | | |

### Acid resistance

### Acid resistance

The panels were coated on both sides. Half of the panel was dipped into a 5 % HCL solution for a given time. The difference in darkness, ΔL, before and after the test, describes the corrosion of the panels. The panels with high performance with respect to corrosion have low absolute ΔL value, while the panels which are highly corroded have high absolute dL values.

.. The coatings with an amino alcohol showed little change in darkness. For THAM the performance increased with the level of THAM.

**Table 3**

| **Time exposed to 5 % HCl solution [min]** | **1 (ref.) - ΔL** | **2 - ΔL** | **3 - ΔL** | **4 - ΔL** | **5 - ΔL** | **6 - ΔL** | **7 - ΔL** |
|---|---|---|---|---|---|---|---|
| 30 | -0,34 | -0,12 | -0,02 | 0,011 | 0,02 | -0,03 | -0,01 |
| 45 | -1,1 | -0,31 | -0,1 | 0 | -0,21 | -0,03 | -0,16 |
| 60 | -1,97 | -0,61 | -0,31 | -0,07 | -0,63 | -0,1 | -0,28 |
| 75 | -2,84 | -0,95 | -0,52 | -0,14 | -1,1 | -0,2 | -0,52 |
| 90 | -3,54 | -1,38 | -0,81 | -0,31 | -1,54 | -0,33 | -0,71 |
| 105 | -4,03 | -1,85 | -1,05 | -0,47 | -1,91 | -0,51 | -0,94 |
| 120 | -4,57 | -2,28 | -1,36 | -0,64 | -2,28 | -0,74 | -1,26 |

### Alkaline resistance

1 cm² Whatman filter paper 597 was dipped into a 1 % NaOH solution, and immediately placed on the coated panels. The time to visual darkening was recorded as the ΔL values (see above) . It takes a longer time before the coatings that contain amino alcohol are corroded by the NaOH solution. The performance is also increasing with increasing level of additive.

**Table 4**

| | **1 (ref)** | **2** | **3** | **4** | **5** | **6** | **7** |
|---|---|---|---|---|---|---|---|
| Time exposed to 1 % NaOH solution without blackening [min] | 5 | 10 | 12,5 | 15 | 10 | 12,5 | 12,5 |

### Humidity resistance

Corrosion test/humidity test according to ISO 6270-2 was performed. The coatings are exposed to condensation atmosphere with constant humidity (CH). Air temperature is 40 ± 3 °C, relative humidity is approximately 100 % with condensation on test specimens. Gloss and colour before and after the test are measured.

The difference in colour, ΔE, describes the corrosion of the panels. The panels with high performance with respect to corrosion have low ΔE value, while the panels which are highly corroded have high ΔE values. The performance also increases with increasing level of additive.

**Table 5**

| Corrosion test (humidity test 40 °C) | 1 (ref) | 2 | 3 | 4 | 5 | 6 | 7 |
|---|---|---|---|---|---|---|---|
| ΔE, 48 h | 1,96 | 1,26 | 0,25 | 0,65 | 1,14 | 0,85 | 1,29 |
| ΔE, 96 h | 7,06 * | 3,71 | 0,34 | 0,33 | 2,45 | 0,63 | 2,76 |
| ΔE, 144 h | - | 5,34 | 0,82 | 0,58 | 3,68 | 0,67 | 3,55 |
| ΔE, 192 h | - | 6,04 | 1,77 | 1,02 | 4,92 | 0,87 | 5,13 |
| ΔE, 240 h | - | 6,49 | 3,03 | 1,80 | 5,46 | 1,04 | 5,75 |
| ΔE, 336 h | - | 7,18 * | 4,39 | 3,15 | 5,99 | 1,56 | 6,45 |
| ΔE, 408 h | - | - | 4,63 | 3,41 | 6,30 | 1,98 | 6,68 |
| Initial gloss at 60° | 93 | 89 | 82 | 82 | | | |

| | | | | | | | |
|---|---|---|---|---|---|---|---|
| *completely destroyed | | | | | | | |

### Adhesion

A multiple cutting tools with 6 cutting edges as per ISO 2409 Standard is used to make a crosscut in the coating with cutting rate 2-5 cm/sec. Then 5 mm Erichsen is made in the middle of the crosscut, and adhesive tape (3M No#250) is pressed onto the lattice pattern. The tape is then removed and a classification Gt0 to Gt5 is made. Gt0 describes that no coating has been removed, whereas Gt5 describes that all coating has been removed.

| | 1 | 2 | 3 | 4 | 5 | 6 | 7 |
|---|---|---|---|---|---|---|---|
| Crosshatch 1 mm + Erichsen 5 mm + tape | Gt5 | Gt4 | Gt0 | Gt0 | Gt0 | Gt0 | Gt0 |

## Claims

1. A particulate coating composition, preferably a powder coating composition, comprising:
(i) at least one hardener such as at least one epoxy containing compound,
(ii) at least one polyester polymer,
(iii) at least one amino alcohol; and
(iv) at least one metallic pigment.

2. A coating composition as claimed in any preceding claim wherein the metallic pigment is uncoated or coated with silica.

3. A coating composition as claimed in any preceding claim wherein the metal in the metallic pigment comprises Al.

4. A coating composition as claimed in any preceding claim wherein component (i) and (ii) combined form 40 to 99 wt% of the coating composition.

5. A coating composition as claimed in any preceding claim wherein the metallic pigment forms 0.1 to 10 wt%, preferably 0.2 to 4 wt% of the coating composition.

6. A coating composition as claimed in any preceding claim wherein the amino alcohol forms 0.1 to 10 wt%, preferably 0.3 to 5 wt% of the coating composition.

7. The coating composition according to any preceding claim, wherein said at least one amino alcohol is of formula:
NH₂R¹
where R¹ is a linear or branched alkyl group of 1 to 10 carbons, preferably 2 to 8 carbons, and more preferably 2 to 4 carbons that contains at least one hydroxyl group; or
NHR¹R²
wherein R¹ is a linear or branched alkyl group of 1 to 10 carbons, preferably 2 to 8 carbons, and more preferably 2 to 4 carbons, or a linear or branched alkyl group of 1 to 10 carbons, preferably 2 to 8 carbons, and more preferably 2 to 4 carbons that contains at least one primary hydroxyl group and R² is a linear or branched alkyl group of 1 to 10 carbons, preferably 2 to 8 carbons, and more preferably 2 to 4 carbons that contains at least one hydroxyl group; or mixtures thereof.

8. The coating composition according to claim 7, wherein the at least one amino alcohol is selected from diethanolamine, ethanolamine, 2-amino-1-butanol, 2-amino-2-methyl-1-propanol, 2-amino-2-ethyl-1,3-propanediol, tris(hydroxymethyl)aminomethane, 2-amino-2-methyl-1,3-propanediol, monomethylaminoethanol, isopropylaminoethanol, t-butylaminoethanol, ethylaminoethanol, n-butylaminoethanol, isopropanolamine, diisopropanolamine, and mixtures thereof.

9. A coating composition as claimed in any preceding claim wherein the amino alcohol is tris(hydroxymethyl)aminomethane (THAM) or diethanol amine.

10. A coating composition as claimed in any preceding claim wherein the hardener is an epoxy resin.

11. A substrate coated with a particulate coating composition as claimed in any one of claims 1 to 10, preferably wherein said particulate coating composition forms the top layer on the substrate.

12. A substrate coated with a particulate coating composition or a substrate coated with a primer layer and thereover a particulate coating composition layer as defined in claims 1 to 10 wherein said powder coating composition is cured.

13. A process for producing a particulate coating composition as claimed in claims 1 to 10, preferably powder coating composition, comprising blending at least one hardener such as at least one epoxy containing compound, at least one polyester polymer, and at least one amino alcohol to form a mixture;
extruding said mixture to obtain particles;
adding at least one metallic pigment to form a particulate powder coating.

14. A process for coating a substrate with a particulate coating as claimed in claims 1 to 10, e.g. using electrostatic spraying, comprising applying said particulate coating to said substrate, e.g. using electrostatic spraying and optionally curing the coating.

15. Use of an amino alcohol to prevent corrosion of a metallic pigment present in a powder coating composition comprising at least one hardener such as at least one epoxy containing compound, at least one polyester polymer, and at least one metallic pigment.

## Patentansprüche

1. Partikuläre Beschichtungszusammensetzung, vorzugsweise eine Pulverbeschichtungszusammensetzung, umfassend:
(i) mindestens einen Härter, wie mindestens eine epoxidhaltige Verbindung,
(ii) mindestens ein Polyesterpolymer,
(iii) mindestens einen Aminoalkohol; und
(iv) mindestens ein Metallpigment.

2. Beschichtungszusammensetzung nach einem vorstehenden Anspruch, wobei das Metallpigment unbeschichtet oder mit Silica beschichtet ist.

3. Beschichtungszusammensetzung nach einem vorstehenden Anspruch, wobei das Metall in dem Metallpigment Al umfasst.

4. Beschichtungszusammensetzung nach einem vorstehenden Anspruch, wobei Komponente (i) und (ii) zusammen 40 bis 99 Gew.-% der Beschichtungszusammensetzung bilden.

5. Beschichtungszusammensetzung nach einem vorstehenden Anspruch, wobei das Metallpigment 0,1 bis 10 Gew.-%, vorzugsweise 0,2 bis 4 Gew.-% der Beschichtungszusammensetzung bildet.

6. Beschichtungszusammensetzung nach einem vorstehenden Anspruch, wobei der Aminoalkohol 0,1 bis 10 Gew.-%, vorzugsweise 0,3 bis 5 Gew.-% der Beschichtungszusammensetzung bildet.

7. Beschichtungszusammensetzung nach einem vorstehenden Anspruch, wobei der mindestens eine Aminoalkohol die Formel aufweist:
NH₂R¹
worin R¹ eine lineare oder verzweigte Alkylgruppe mit 1 bis 10 Kohlenstoffatomen, vorzugsweise 2 bis 8 Kohlenstoffatomen und bevorzugter 2 bis 4 Kohlenstoffatomen ist, die mindestens eine Hydroxylgruppe enthält; oder
NHR¹R²
worin R¹ eine lineare oder verzweigte Alkylgruppe mit 1 bis 10 Kohlenstoffatomen, vorzugsweise 2 bis 8 Kohlenstoffatomen und bevorzugter 2 bis 4 Kohlenstoffatomen, oder eine lineare oder verzweigte Alkylgruppe mit 1 bis 10 Kohlenstoffatomen, vorzugsweise 2 bis 8 Kohlenstoffatomen und bevorzugter 2 bis 4 Kohlenstoffatomen, die mindestens eine primäre Hydroxylgruppe enthält, ist und R² eine lineare oder verzweigte Alkylgruppe mit 1 bis 10 Kohlenstoffatomen, vorzugsweise 2 bis 8 Kohlenstoffatomen und bevorzugter 2 bis 4 Kohlenstoffatomen, die mindestens eine Hydroxylgruppe enthält, ist; oder Gemische davon.

8. Beschichtungszusammensetzung nach Anspruch 7, wobei der mindestens eine Aminoalkohol ausgewählt ist aus Diethanolamin, Ethanolamin, 2-Amino-1-butanol, 2-Amino-2-methyl-1-propanol, 2-Amino-2-ethyl-1,3-propandiol, Tris(hydroxymethyl)aminomethan, 2-Amino-2-methyl-1,3-propandiol, Monomethylaminoethanol, Isopropylaminoethanol, t-Butylaminoethanol, Ethylaminoethanol, n-Butylaminoethanol, Isopropanolamin, Diisopropanolamin und Gemischen davon.

9. Beschichtungszusammensetzung nach einem vorstehenden Anspruch, wobei der Aminoalkohol Tris(hydroxymethyl)aminomethan (THAM) oder Diethanolamin ist.

10. Beschichtungszusammensetzung nach einem vorstehenden Anspruch, wobei der Härter ein Epoxidharz ist.

11. Substrat, das mit einer partikulären Beschichtungszusammensetzung nach einem der Ansprüche 1 bis 10 beschichtet ist, vorzugsweise wobei die partikuläre Beschichtungszusammensetzung die oberste Schicht auf dem Substrat bildet.

12. Substrat, das mit einer partikulären Beschichtungszusammensetzung beschichtet ist, oder ein Substrat, das mit einer Primerschicht und darüber einer partikulären Beschichtungszusammensetzungschicht nach den Ansprüchen 1 bis 10 beschichtet ist, wobei die Pulverbeschichtungszusammensetzung gehärtet ist.

13. Verfahren zur Herstellung einer partikulären Beschichtungszusammensetzung nach den Ansprüchen 1 bis 10, vorzugsweise Pulverbeschichtungszusammensetzung, umfassend das Mischen von mindestens einem Härter, wie mindestens einer epoxidhaltigen Verbindung, mindestens einem Polyesterpolymer und mindestens einem Aminoalkohol, um ein Gemisch zu bilden;
Extrudieren des Gemisches, um Partikel zu erhalten;
Hinzufügen von mindestens einem Metallpigment, um eine partikuläre Pulverbeschichtung zu bilden.

14. Verfahren zum Beschichten eines Substrats mit einer partikulären Beschichtung nach den Ansprüchen 1 bis 10, z. B. unter Verwendung des elektrostatischen Sprühens, umfassend das Aufbringen der partikulären Beschichtung auf das Substrat, z. B. unter Verwendung des elektrostatischen Sprühens und gegebenenfalls Härten der Beschichtung.

15. Verwendung eines Aminoalkohols zur Verhinderung der Korrosion eines Metallpigments, das in einer Pulverbeschichtungszusammensetzung vorhanden ist, die mindestens einen Härter, wie mindestens eine epoxidhaltige Verbindung, mindestens ein Polyesterpolymer und mindestens ein Metallpigment umfasst.

## Revendications

1. Composition de revêtement particulaire, de préférence une composition de revêtement en poudre, comprenant :
(i) au moins un durcisseur tel qu'au moins un composé à teneur en époxy,
(ii) au moins un polymère de polyester,
(iii) au moins un aminoalcool ; et
(iv) au moins un pigment métallique.

2. Composition de revêtement telle que revendiquée dans une quelconque revendication précédente dans laquelle le pigment métallique est non revêtu ou revêtu par de la silice.

3. Composition de revêtement telle que revendiquée dans une quelconque revendication précédente dans laquelle le métal dans le pigment métallique comprend Al.

4. Composition de revêtement telle que revendiquée dans une quelconque revendication précédente dans laquelle les composants (i) et (ii) combinés forment de 40 à 99 % en poids de la composition de revêtement.

5. Composition de revêtement telle que revendiquée dans une quelconque revendication précédente dans laquelle le pigment métallique forme de 0,1 à 10 % en poids, de préférence de 0,2 à 4 % en poids de la composition de revêtement.

6. Composition de revêtement telle que revendiquée dans une quelconque revendication précédente dans laquelle l'aminoalcool forme de 0,1 à 10 % en poids, de préférence de 0,3 à 5 % en poids de la composition de revêtement.

7. Composition de revêtement selon une quelconque revendication précédente, dans laquelle ledit au moins un aminoalcool est de formule :
NH₂R¹
où R¹ est un groupe alkyle linéaire ou ramifié de 1 à 10 carbones, de préférence de 2 à 8 carbones, et plus préférablement de 2 à 4 carbones qui contient au moins un groupe hydroxyle ; ou
NHR¹R²
dans laquelle R¹ est un groupe alkyle linéaire ou ramifié de 1 à 10 carbones, de préférence de 2 à 8 carbones, et plus préférablement de 2 à 4 carbones, ou un groupe alkyle linéaire ou ramifié de 1 à 10 carbones, de préférence de 2 à 8 carbones, et plus préférablement de 2 à 4 carbones qui contient au moins un groupe hydroxyle primaire et R² est un groupe alkyle linéaire ou ramifié de 1 à 10 carbones, de préférence de 2 à 8 carbones, et plus préférablement de 2 à 4 carbones qui contient au moins un groupe hydroxyle ; ou des mélanges de ceux-ci.

8. Composition de revêtement selon la revendication 7, dans laquelle le au moins un aminoalcool est choisi parmi la diéthanolamine, l'éthanolamine, le 2-amino-1-butanol, le 2-amino-2-méthyl-1-propanol, le 2-amino-2-éthyl-1,3-propanediol, le tris(hydroxyméthyl)aminométhane, le 2-amino-2-méthyl-1,3-propanediol, le monométhylaminoéthanol, l'isopropylaminoéthanol, le t-butylaminoéthanol, l'éthylaminoéthanol, le n-butylaminoéthanol, l'isopropanolamine, la diisopropanolamine, et des mélanges de ceux-ci.

9. Composition de revêtement telle que revendiquée dans une quelconque revendication précédente dans laquelle l'aminoalcool est le tris(hydroxyméthyl)aminométhane (THAM) ou la diéthanolamine.

10. Composition de revêtement telle que revendiquée dans une quelconque revendication précédente dans laquelle le durcisseur est une résine époxy.

11. Substrat revêtu par une composition de revêtement particulaire telle que revendiquée dans l'une quelconque des revendications 1 à 10, de préférence dans lequel ladite composition de revêtement particulaire forme la couche supérieure sur le substrat.

12. Substrat revêtu par une composition de revêtement particulaire ou substrat revêtu par une couche d'apprêt et par-dessus par une composition de revêtement particulaire telle que définie dans les revendications 1 à 10 dans lequel ladite composition de revêtement en poudre est durcie.

13. Procédé de production d'une composition de revêtement particulaire telle que revendiquée dans les revendications 1 à 10, de préférence une composition de revêtement en poudre, comprenant le mélange d'au moins un durcisseur tel qu'au moins un composé à teneur en époxy, d'au moins un polymère de polyester, et d'au moins un aminoalcool pour former un mélange ;
l'extrusion dudit mélange pour obtenir des particules ;
l'ajout d'au moins un pigment métallique pour former un revêtement en poudre particulaire.

14. Procédé de revêtement d'un substrat par un revêtement particulaire tel que revendiqué dans les revendications 1 à 10, par exemple à l'aide d'une pulvérisation électrostatique, comprenant l'application dudit revêtement particulaire sur ledit substrat, par exemple à l'aide d'une pulvérisation électrostatique et facultativement le durcissement du revêtement.

15. Utilisation d'un aminoalcool pour empêcher la corrosion d'un pigment métallique présent dans une composition de revêtement en poudre comprenant au moins un durcisseur tel qu'au moins un composé à teneur en époxy, au moins un polymère de polyester, et au moins un pigment métallique.
